(19) Europäisches Patentamt
European Patent Office
Office européen des brevets

(11) **EP 3 472 012 B1**

(12) **EUROPEAN PATENT SPECIFICATION**

(45) Date of publication and mention
of the grant of the patent:
**01.04.2020 Bulletin 2020/14**

(21) Application number: **17719225.9**

(22) Date of filing: **19.04.2017**

(51) Int Cl.:
**B60T 17/22** *(2006.01)*          **F16D 66/00** *(2006.01)*

(86) International application number:
**PCT/EP2017/059238**

(87) International publication number:
**WO 2018/019438 (01.02.2018 Gazette 2018/05)**

(54) **DEVICE FOR DETECTING THE RESIDUAL BRAKING TORQUE IN A VEHICLE EQUIPPED WITH DISC BRAKES**

RESTBREMSDREHMOMENTDETEKTIONSVORRICHTUNG IN EINEM FAHRZEUG AUSGERÜSTET MIT SCHEIBENBREMSEN

APPAREIL POUR DETECTER LE TORQUE DE FREIN RESIDUEL, DANS UN VEHICULE EQUIPÉ AVEC DES FREINS À DISQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2016 IT 201600077944**

(43) Date of publication of application:
**24.04.2019 Bulletin 2019/17**

(73) Proprietor: **ITT Italia S.r.l.**
**20020 Lainate (MI) (IT)**

(72) Inventors:
• **SOLARI, Mattia**
**10062 Luserna San Giovanni (Torino) (IT)**
• **TERRANOVA, Marco**
**12032 Barge (CN) (IT)**

(74) Representative: **Rapisardi, Mariacristina**
**Ufficio Brevetti Rapisardi S.r.l.**
**Via Serbelloni, 12**
**20122 Milano (IT)**

(56) References cited:
JP-A- H0 454 326          KR-A- 20020 051 429
KR-A- 20070 027 041       KR-A- 20130 039 804
KR-A- 20150 045 047       KR-B1- 100 791 632
US-B1- 6 247 560

**Description**

As is known, the residual braking torque is the braking torque of very limited values to be found in a vehicle as a result of the accidental interaction between the brake pad and the disc when the vehicle is not braking.

This condition is actually very common and is due to malfunctioning of the brake caliper which, after braking, maintains residual contact between the disc and the pad.

The persistence of this state of contact, though small, maintains a near constant degree of residual braking torque which, over long periods of time, considerably influences fuel consumption and brake pad wear.

The new regulations EU6 715/2007/EC standard concerning $CO_2$ emissions establish more sharply stringent limits regarding the emissions themselves, forcing motor vehicle manufacturers not to neglect innovative solutions aimed at reducing them.

Within this scenario, controlling any loss of performance regarding the braking system and the ability to limit and prevent increases in the residual braking torque, so as to curb consumption, and consequently vehicle emissions, assumes ever increasing importance.

To date, a system or method for measuring the residual braking torque on board, and in real time, is not available. This type of measurement can usually be performed on a laboratory dynamometer test bench, normally used to test and evaluate residual braking torque during the development of a braking system.

Equivalent on board automotive systems are not available due to cost and size.

For heavy vehicle applications commercial sensors are available for measuring the clearance in the caliper.

Said sensors, however, can only measure the total clearance within the entire caliper, which is the sum of the clearance of the two brake pads, and their distance from the disk.

These known sensors, which are available only for truck based applications, cannot in fact distinguish between the two brake pads; they only measure geometric distances and do not perform a real measurement of the residual running resistance. KR20070027041 A1 discloses a device for detecting the residual braking torque in a vehicle equipped with disc brakes according to the preamble of claim 1.

The task that the present invention proposes is that of overcoming the above limitations as complained of in the prior art.

As part of this task, one purpose of the invention is to design a device and a method that will permit the real measurement of the residual braking torque in a vehicle due to the unwanted interaction between the brake pad and the disc, corresponding to each pad of each brake.

A further aim of the invention is that of designing a device and a method that will permit the real time measurement of the residual braking torque.

A further aim of the invention is that of designing a device and a method that will permit the real measurement of residual braking torque with a level of sensitivity comparable to that of the dynamometer test.

A further aim of the invention is that of designing a device and a method that will permit the real measurement of the residual braking torque to permit the detection of the minimum clearance between the brake pads and the brake disc leading to reduced braking delay.

A further aim of the invention is that of designing a device and a method that will permit the real measurement of the residual braking torque, using means that are compatible with on board installations and applications. A further aim of the invention is that of designing a device and a method that will permit the real measurement of the residual braking torque, using means that are compatible with those on board installations and applications that are connected by connection means to remote means of recording and processing.

This task as well as these and other objectives are achieved by a device for the detection of the residual braking torque in a vehicle equipped with disc brakes, including, for each wheel of the vehicle, at least one piezoceramic sensor integrated into the friction material support of a brake assembly, characterized in that said piezoceramic sensor is connected, by means of an electronic circuit, to at least one electronic control unit dedicated to acquiring and managing, using managing means, the signals detected by said piezoceramic sensor directly from said brake assembly friction material, said signal management means including at least one residual torque indicator interacting by means of at least one communication interface to at least one on board vehicle computer over at least one dedicated on board vehicle communication BUS.

A further aim of the present invention will also be a method for detecting the residual braking torque of a vehicle by means of a device comprising at least one piezoceramic sensor for each wheel of the vehicle integrated into the friction material support of a brake assembly connected by means of an electrical circuit to at least one electronic control unit dedicated to the acquisition and management, using means of management, of the signals detected by the piezoceramic sensor directly by the friction material of the brake assembly, characterized in that the means of managing the signals allow for constant updating in real time of the residual braking torque measurements.

Further characteristics of the present invention are also defined in the subordinated claims.

Further features and benefits of the invention will become more evident from the description of a preferred but not exclusive embodiment of a device and a method for detecting the residual braking torque of a vehicle, illustrated by way of non-limiting example in the enclosed drawings, of which:

Fig. 1 represents the generic layout of a braking system for vehicles with an ABS system;
Fig. 2 represents the layout of a brake pad with intelligent sensors;
Fig. 3 represents a functional diagram of an electronic control unit;
Fig. 4 displays the variation in amplitude of a signal after braking with various degrees of braking torque;
Fig. 5 displays the variation in the residual braking indicator as a function of frequency;
Fig. 6a shows the development of the braking algorithm as a function of time;
Fig. 6b represents a typical calibration curve;
Fig. 7 represents calibration curves obtained by shear sensor only and with other sensors;
Fig. 8 shows deviations in measured values with shear sensors only and with other sensors;
Fig. 9 illustrates the differences between the residual braking values measured on the bench and the values obtained from the calibration curves for several pairs of pads;
Fig. 10 illustrates experimental residual braking values both before and after the application of braking to a passenger car;
Fig. 11 illustrates experimental residual braking values as a function of time with a passenger car.

With reference to the above figures, the device and the method for detecting the residual braking torque of a vehicle, generically indicated with 1, comprise at least one brake master cylinder 4, and one pressure pump 5 for either hydraulic oil or air, either one hydraulic oil or pneumatic air based system for the distribution of the braking pressure.

Preferably, but in a non-limiting way, reference will be made to a motor vehicle equipped with a braking system (normally having an integrated ABS system) and therefore with at least one control unit 2 for managing the ABS system, possibly integrated with ASR and ESP systems. A braking system with ABS normally has solenoid valves, distributors and oil or air lines, phonic wheels 50 and tachometer sensors 51 on each wheel 9 of the vehicle equipped with ABS.

Below we will consider the application of the invention to a motor vehicle equipped with an ABS braking system since the same characteristics and statements are also applicable to an ABS/ASR/ESP system.

In addition, hereinafter, reference will be made to a motor vehicle equipped with disc brakes and ABS, although what will be stated is applicable to any type of vehicle equipped with disc brakes, with or without ABS, such as trucks, trailers, tipper-trucks, cranes, motorcycles and even airplanes.

In particular, reference will be made to a motor vehicle braking system equipped with disc brakes 8, advantageously equipped with brake pads 7 equipped with intelligent sensors 16 for detecting the residual braking torque data.

Each brake pad 7 comprises a rear plate-shaped support 21 ("backplate"), a block of friction material 12 supported by the support 21, and one or more intelligent piezoceramic sensors 16 supported by the support 21 and interposed between the latter and the block of friction material 12.

The support 21 supports an electrically isolated electrical circuit 11, 15 that has electrical contacts to which the electrodes of the intelligent piezoceramic sensors 16 are connected together with the electrodes of at least one temperature sensor 13 which is also preferably provided.

The electrical circuit 11, 15 is preferably produced using silk-screen printing onto the support 21 and is resistant to high temperatures (at least 200 °C, preferably 350 °C for passenger cars, or at least 400 °C, preferably 600 °C for heavy goods vehicles).

The sensors 13, 16 are attached to the support 21 at specific positions on the electrical circuit 11, 15 and are soldered or glued using conductive glues in said positions.

The electrical circuit 11, 15 connects an electrical connector 14 to piezoceramic sensors 16, which are shear force sensors, and to each temperature sensor 13.

The connector 14 picks up all of the signals coming from the sensors 16, 13 and allows the external electronic systems to connect to the brake pad 7.

In addition to this, in order to guarantee the electrical insulation and mechanical protection properties, together with optimal force transmission, a protective cap is positioned at least over the sensors 16 and over any conductive part of the electrical circuit 11, 15.

This is achieved by means of special "caps" made of resin or ceramic insulating materials.

A damping layer interposed between the block of friction material 12 and the support 21 can also be provided.

In particular, as regards the sensors to be integrated into the intelligent pad for residual torque applications, the minimum configuration will present at least one piezoceramic shear sensor 16 for high temperatures (at least > 200 °C, the Curie point and, preferably with an operating temperature > 300 °C, and at least one temperature sensor 13 preferably with an operating temperature > 300 °C.

The shear sensor 16 should preferably be positioned within the pressure center of the brake pad 7, which is quantifiable with a reasonable approximation on the basis of the size and geometric shape of the same, together with its mass distribution.

The temperature sensor 13 should be positioned, preferably, as close as possible to the shear sensor 16.

The temperature sensor 13 is used, primarily, for compensation purposes.

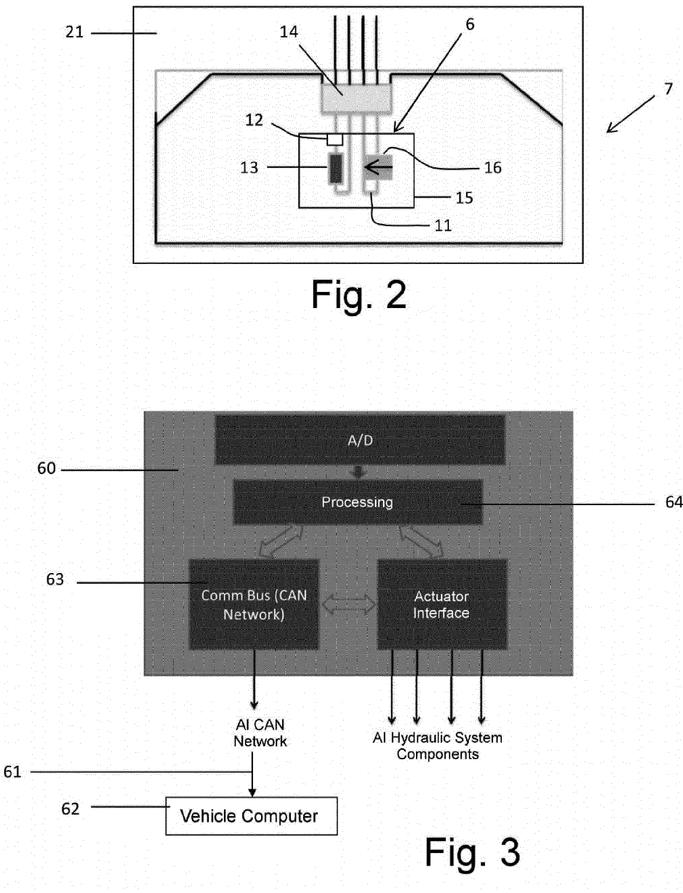

In Figure 2, the square represents the shear sensor 16 and the arrow indicates the direction of polarization which is directed along the tangential forces applied to the brake pad during braking, which forces are directly linked to the braking torque measurements.

The black rectangle represents instead the temperature sensor 13, while the horizontal gray rectangle represents the connector 14.

It is clear that the embodiment shown in figure 2 is only one of the possible forms of embodiment.

The positions and the relative positions of the sensors can be modified and other auxiliary sensors can be added: for example, four (or even only two) piezoceramic "pressure" sensor could be placed near the corners of the rectangle 21 representing the backplate in order to measure the axial tension transmitted by the piston of the caliper 22 during braking.

Pressure sensors can be used in lieu of shear sensors, although the preferred configuration will present shear sensors.

In addition, in order to yield more information than with a single shear force sensor, piezoceramic bi-axial or tri-axial sensors can be used (not illustrated).

These additional sensors have only an auxiliary function as they can be used to optimize the distribution of pressure or to determine the coefficient of friction of the disc-pad in order to maximize the braking efficiency, but at the same time they can also be used to construct an indicator to measure the residual torque.

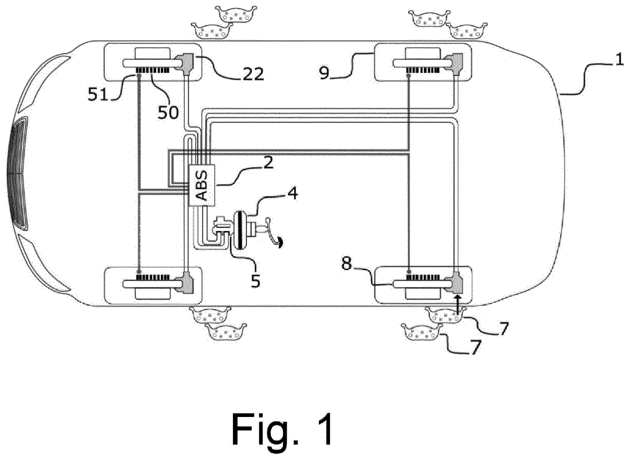

Figure 1 shows a diagram of a device and a method according to the invention, that permit the real measurement of the residual braking torque in a vehicle due to the unwanted interaction between the brake pad 7 and the disc 8, at each pad of the brake caliper 22.

The basic elements of this innovative architecture, which preferably and advantageously are implemented on a motor vehicle equipped with a disc brake system, are substantially but not exclusively:

i. brake pads 7 as described above with at least one piezoceramic shear sensor 16 for detecting the braking torque, and at least one pad of this type per wheel, but preferably two.

ii. at least one electronic control unit 60 dedicated to the acquisition and management of the residual braking torque signals from the sensors 16 of the intelligent pad 7 and that will include all of the algorithms needed for the real evaluation of the residual braking torque.

iii. at least one communication interface for connecting to vehicle on board services 61, which will include all communication systems (including their protocols) in order to allow for the exchange of information regarding the residual braking torque with at least one on board vehicle computer 62 by means of a dedicated communication system.

The residual torque electronic control unit 60, in the preferred embodiment, fig. 3 will integrate both the sensors 16 of a brake pad 7 of any wheel 9 provided with piezoceramic and temperature sensors and a communication system 63.

In general, the signals from eight brake pads 7 will typically be detected, i.e. from the sensors integrated into said brake pads (two pads per brake caliper), together with signals from auxiliary sensors, typically temperature sensors, integrated into the intelligent pad or directly installed onto the calipers.

These sensors will be digitized using an A/D converter and the signals will be processed by means of algorithms, for calculating the residual braking torque, installed in the electronic control unit 60, which unit will host a microprocessor 64 for the execution of such algorithms in order to transform the raw data detected from the signals coming from the intelligent pads 7 into real time information concerning the residual braking torque.

Once this information is available it will be sent to the motor vehicle's communication network for the purpose of displaying it or in order to activate an alarm, for example, on the car dashboard.

Alternatively, or in parallel, this information may also be sent to the operators of a remote service network using long-range data transmission means such as, for example, M2M modules or equivalent technologies.

Another important communication channel will take the form of the direct real time interaction/communication with the brake caliper 22 (caliper fitted with intelligent pads 7) which would be particularly relevant for active intelligent calipers, i.e. equipped with their own actuating means (not shown) that allow for the active retraction of the caliper based upon direct measurements made by the intelligent brake pad residual torque sensors after braking in order to minimize the residual braking torque itself.

The residual braking torques to which a brake caliper is typically subjected usually fall within the range of between 0.5 and 30 Nm. The normal operating braking torques are instead usually between 30 and 4000 Nm.

Starting from this basic consideration, due to the signal to noise ratio which would prevent the reading of exceptionally low torque values, it is clear that with a single type of known sensor it is impossible to cover so broad a range.

On the other hand, a system optimized to measure the low range would be potentially compromised by the high torque range reading, which could then lead to serious reliability problems.

A characteristic of the invention is instead a method for determining the residual braking torque that uses the same sensors that have been optimized for the typical braking torque range (from 30 to 4000 Nm), increasing their measurement ability up to the typical range for residual torque measurements (from 0.5 to 30 Nm).

The method is characterized by an identification technique, namely by the creation of a residual braking torque indicator which measures the residual braking torque that is functionally associated with the actual residual braking torque.

This residual torque indicator does not directly measure the residual torque but rather those quantities that can be associated with the presence of the residual braking torque and with its intensity.

The method described in the present invention has been experimentally proven to be very sensitive and is capable of extending the measurement range down to the lowest typical residual braking torque values, while at the same time retaining the same efficient sensors for measuring the operational braking torque.

The method of the invention has been developed both for frequency and time domain analyses. The method of the invention based upon frequency concerns the creation of the residual braking torque indicator and the calibration procedure for such an indicator in order to provide, in quantitative terms, the residual braking torque starting out from the spectrum of frequencies of the signals coming from the piezoceramic sensors installed on the intelligent pad.

The approach used by the present invention is used to create a residual braking torque indicator that is nonetheless associated with the actual valuesof the residual braking torque, instead of directly measuring such values.

The fundamental idea is derived from the observation that every time there is a measurable residual braking torque, a specific peak structure appears within the frequency spectrum of the signals $V(\omega)$, associated with the angular rotation speed of the wheels, as provided by piezoceramic sensors installed on the intelligent pad.

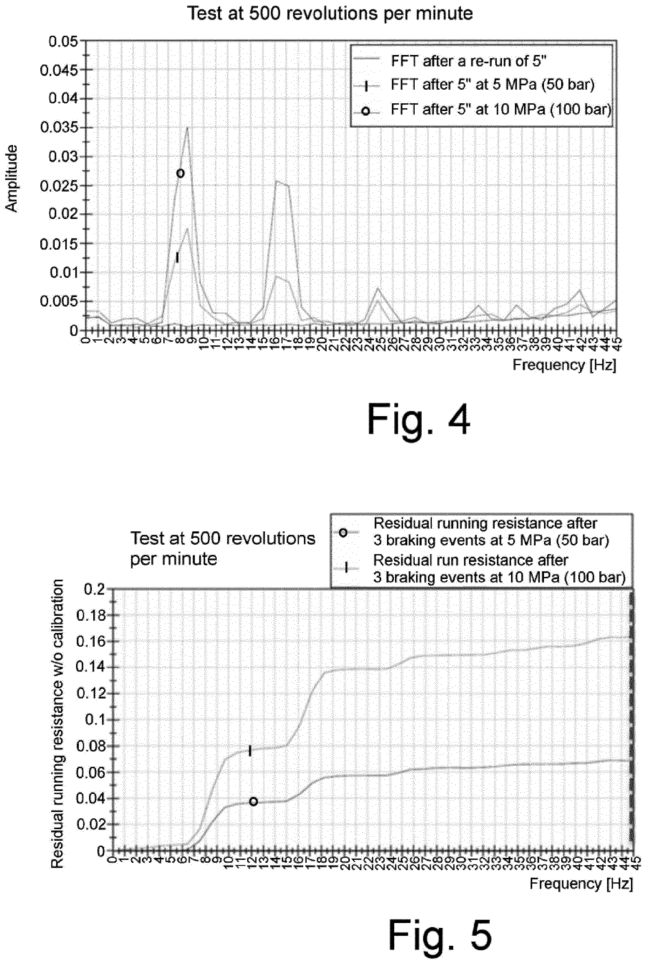

Figure 4 shows one typical frequency spectrum of the signal $V(\omega)$, under three different operational braking conditions, for the same angular rotation speed of the wheel and with increasing residual braking torque values.

From this figure the presence of peaks in the amplitude of the signal corresponding to the same frequencies under the three different braking conditions is evident, this together with an increase in the amplitude of the peaks corresponding to increasing values associated with the operational braking conditions.

In order to create a residual braking torque indicator, a generic class of a function for the signal $V(\omega)$ is considered, shown in the following formula:

$$RD_I = \int_0^{\omega_C} \sum_{i=1}^{N} |V_i(\omega)|^\alpha - RD_I^0$$

In which $RD_I$ is the residual braking torque indicator, $\omega_C$ is the cutoff frequency of the signal, $\alpha$ is a positive constant, N is the total number of piezoceramic sensors on the two pads of the calipers and $RD_I^0$ is the integral function of the signals as reported in the first element of the definition of $RD_I$, but obtained by the manual withdrawal of the pads into the caliper, i.e. it is the contribution associated with external electromagnetic disturbances and any contribution due to vibrations from bearings, the wheel hub, etc., or, in other words, the background noise signal that is not to be considered and that is to be subtracted from the indicator.

The cutoff frequency of the signal $\omega_C$ can be chosen arbitrarily but is, by convention, fixed below 50 Hz, in order to keep electromagnetic compatibility disturbances as low as possible (EMC), but, at the same time, as close as possible to this value in order to increase the range of angular rotation speed of the wheel to which it can be applied.

Conventionally and preferably, this value was set at 45 Hz. This ensures good indicator stability up to speeds in the order of 200 km/h.

In another embodiment for $RD_I$, $\omega_C$ can liberally be higher than 50 Hz, particularly if frequency components are found at high vehicle speeds.

In such a case, a band-pass filter (hardware or software) must however be used at around 50 Hz in order to eliminate all of those electromagnetic compatibility (EMC) contributions that may influence the residual braking torque indicator, and therefore the measurements. Finally and more importantly an indicator entirely similar to those previously shown and discussed will be obtainable by using a generic function $F(V(\omega))$ on condition that a monotone increasing function F is used, in order to ensure that increasing indicator magnitudes similarly correspond to increasing quantities of residual braking torque.

Fig. 5 shows an example of the residual braking torque indicator as a function of the cutoff frequency of the signal, and the value corresponding to an $\omega_C = 45\ Hz$ is shown as a vertical dashed straight line.

Another method of the invention for the creation of a residual braking torque indicator is based upon the time domain signals from the piezoceramic sensors installed on the intelligent pad. As with the case described above, which is based on frequency, the approach used in this second method consists in creating a residual braking torque indicator that whilst not measuring it directly is still associated with the residual braking torque.

Proceeding similarly to the case based on frequency, the time domain frequency function becomes:

$$RD_I = \int_0^{\omega_C} \sum_{i=1}^{N} |V_i(\omega)|^2 = \int_0^{\infty} \sum_{i=1}^{N} |V'_i(\omega)|^2$$

where $V'i(\omega) = V_i(\omega)K(\omega)$ with $K(\omega)$ a signal frequency filter with a cutoff frequency at a $\omega_C$. Using the properties of the Fourier transform it is easy to find:

$$RD_I = \int_0^{\infty} \sum_{i=1}^{N} |V'_i(\omega)|^2 = \int_0^{\infty} \sum_{i=1}^{N} |V_i(t) \otimes K(t)|^2$$

where $\otimes$ stands for the convolution symbol and the integrals are functions of time instead of frequency.

Generalizing, we obtain the general formula:

$$RD_I = \int_0^{T} \sum_{i=1}^{N} |V_i(t) \otimes K(t)|^{\alpha} - RD_I^0$$

In which $RD_I$ is the residual braking torque indicator, T is a clearly longer period of time than the typical turning periods of the wheels within ranges of speed from 5 to 200 km/h, $\alpha$ is a positive constant, N is the total number of piezoceramic sensors on the two pads of the brake calipers and $RD_I^0$ is the integral function of the signals as reported in the first element of the definition of $RD_I$, but obtained by the manual withdrawal of the brake pads of the caliper, i.e. the contribution associated with external electromagnetic disturbances and any contribution due to vibrations from bearings, the wheel hub, etc., or, in other words, the background noise signal that is not to be considered and that is to be subtracted from the indicator.

In the case discussed, the time domain frequency filter algorithm $K(t)$ can easily be calculated and becomes:

$$K(t) = 2i \frac{sen(\omega_c t)}{t}$$

in which $i$ is the imaginary constant, $\omega_C$ is the filter cut-off frequency and $t$ is time.

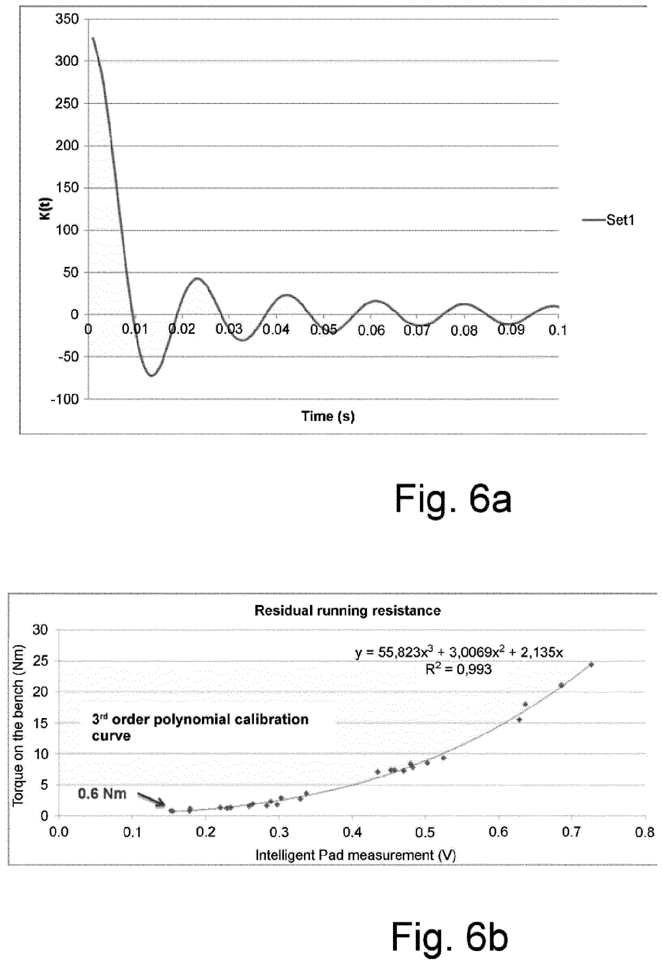

Figure 6a shows a graph of the behavior of this time domain frequency filter algorithm $K(t)$.

As evidence of proof, the decay of $K(t)$ over time is already important after only 0.1s, and, therefore, the fluctuations in high-frequency signals (considerably greater than the cutoff frequency of the signal $\omega_C$) will be eliminated.

In this particular case, the indicator $RD_I$ will take the form:

$$RD_I = \int_0^{T} \sum_{i=1}^{N} |\int_t^{t+\tau} V_i(t') \frac{sen(\omega_c(t-t'))}{t-t'}|^{\alpha} - RD_I^0$$

in which the convolution has been approximated with a finite integral on $t'$ of the two functions that spans an interval of time $\tau$.

If the time interval $\tau$ is quite large compared to the decay over time of the time frequency filter $K(t)$, considering that generally the temporal fluctuations that contribute to $RD_I$ through the signals $V_i(t)$ will vary very slowly over time in that they are associated with wheel rotation frequencies which are usually much lower than the cutoff frequency $\omega_C$, then the approximation will be numerically sound.

In each case, this is a new definition of the residual braking torque indicator.

For reference and for example, $\tau$ could be an interval of 0.1s.

Therefore, the above expression can be further approximated by the following expression:

$$RD_I = \sum_{j=1}^{M} \tau \sum_{i=1}^{N} |\int_{t_j}^{t_j+\tau} V_i(t') \frac{sen(\omega_c(t_j-t'))}{t_j-t'}|^{\alpha} - RD_I^0$$

where the integral of *t* has been approximated by a series *of j* and the time interval has been divided into subranges *M* of width τ.

In the particular case mentioned earlier, for example, with τ = 0.1 s and *T* = 1 s, then M = 10. The expression above, though approximate, has the advantage of being extremely more computationally economical than all of the previous expressions (both as functions of time and frequency).

This expression can easily be integrated into embedded systems and more economical electronic equipment, and will therefore be of particular benefit to real time on board vehicle applications. Advantageously when the measurement conditions and the signal to noise ratio permit it, it is even possible to overlook the filtering term K(t) (by setting it equal to 1 for each point in time t, and by performing simple integration without convolution. In such a case there will be the benefit of having an even more simplified and numerically speaking advantageous version for the computational load required.

Once the $RD_I$ functions of the residual braking torque indicator are obtained, then in order to match these to the residual braking torque measurements, calibration will be necessary which will require a reference calibration bench.

As described below, given that said calibration is based upon the results of $RD_I$ as derived from both algorithms, it will be entirely valid for both methods (based on functions of both frequency and time).

The reference bench may, preferably, be a standard laboratory dynamometer bench with residual braking torque measurement capability, or any other known device having a residual braking torque sensor to be used as reference in order to calibrate the residual braking torque indicator obtained by means of the signals (as a function of either frequency or time) transmitted by the piezoceramic sensors of the intelligent pad in order to measure the residual braking torque directly.

Another preferential feature of such a reference calibration bench will be the ability to check the residual braking torque values during the calibration process in a reliable and precise manner to maintain said values as constant as possible.

A preferential residual braking torque calibration procedure is as follows:

the determination of $RD_I^0$, accomplished by the manual separation of the brake pads from the disk (retraction of the caliper pistons or parts of the caliper) and the acquisition of the background noise on the signals of the intelligent pad and the bench in order to remove any unwanted contributions; setting the residual braking torque by means of manually adjusting the calibration bench, or by equivalent means in order to set the reference value; the mutual acquisition of the residual braking torque from both the calibration bench and the $RD_I$ residual braking torque indicator from the intelligent pad signals; the calibration of the experimental data by means of repeating the manual adjustment procedure and mutual acquisition of the torque for several residual braking torque values on the bench; the creation of an analytical calibration curve interpolated from the best data from an experimental calibration curve.

Preferably, with the residual braking torque calibration procedure using a reference calibration bench, a range of residual braking torque values is considered that varies from 0 to 30 Nm.

At the end of the procedure, a calibration curve is derived with an analytical expression for converting the values of the $RD_I$ residual braking torque indicator to the real values of the residual braking torque *[Nm]* measured on the reference calibration bench.

A typical calibration curve is shown in Figure 6b, with a typical second or third order polynomial function, which, apart from the specific values of the parameters in the polynomial, is repeatable and can be transferred to a caliper and to a different disc, thanks to good independence from the characteristics of both the disk and the caliper itself.

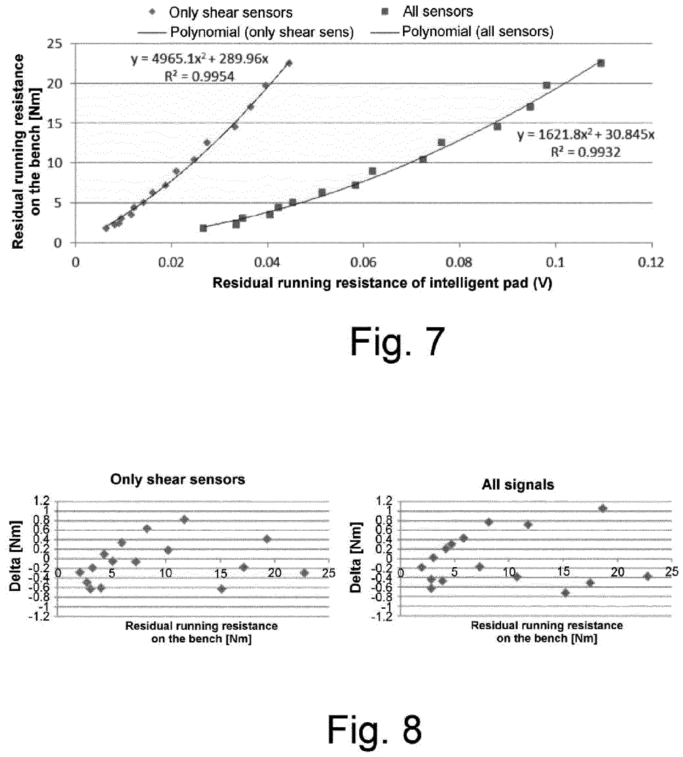

Figure 7 shows instead the dependence of the calibration curve on the number N of intelligent pad sensors, illustrating a comparison between the case with all of the sensors included in evaluations of $RD_I$ (up to 10 sensors), and the case in which only the shear sensors are considered (2 sensors).

The actual result shows that even by limiting the sensors to the shear sensors there is no significant loss in the resolution of the $RD_I$ residual braking torque indicator, and that the shape of the calibration curve has remained almost identical.

A direct comparison with the deviation between the residual braking torque values measured with the intelligent pads using the calibration curves obtained in figure 7 and those of the reference calibration bench are shown in figure 8, wherein it is seen that the maximum deviation is within ± 1 Nm or less.

In figure 8, to the left, the diamonds represent the case that is limited to shear sensors only, while the squares of the figure on the right represent the case with all sensors.

The version of the algorithm with shear sensors only is the preferred version of the present invention, this having taken into consideration that such a configuration lowers the computational load and the requirements for the total number of sensors.

The residual braking torque algorithm based upon signals detected by intelligent pads has been tested under various conditions with sets of different pads and discs and different calipers.

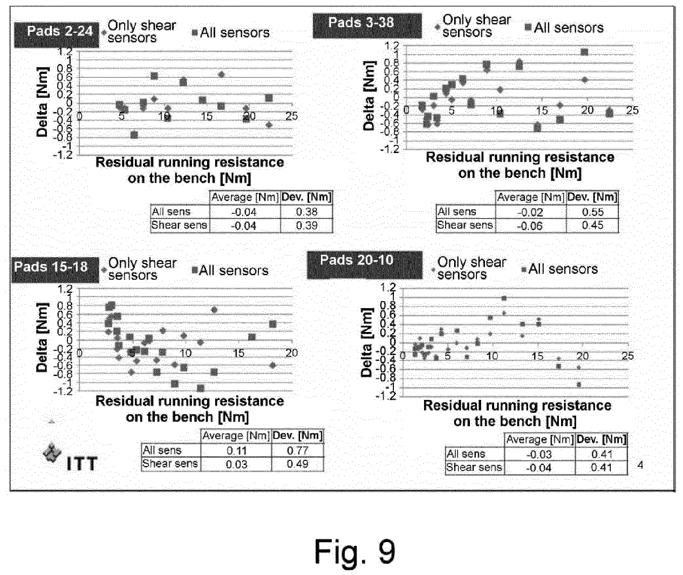

Figure 9 shows the results of the error between the residual braking torque measured by means of the signals from the intelligent pad and the corresponding measurements taken on the reference dynamometer bench for four different sets of pads.

The differences between the results of the measurements by means of the intelligent pads, made after the calibration procedure, and the corresponding values of the measurements taken on the dynamometer bench are shown for different values of residual braking torque within the calibration range (from 0 to 30 Nm).

As evidence of proof, the maximum measurement error using the intelligent pads with respect to the measurements taken on the dynamometer bench is within 1 Nm.

Given that a laboratory dynamometer bench typically has an accuracy of 0.5 Nm, this means that the accuracy of the measurements using the intelligent pads for measuring the residual braking torque is comparable to the accuracy of the measurement on a dynamometer bench.

The results are shown for both of the cases described above: results with all of the sensors on the intelligent pad (10 sensors per brake/pair of intelligent pads, i.e. 5 per each intelligent pad) and results with shear sensors only on the intelligent pad (2 sensors per brake/pair of intelligent pads, i.e. 1 shear sensor per each intelligent pad).

Further, the table below the various graphs reveals the statical findings regarding the average error, maximum error and standard deviations, which confirm the good performances of the calibration curves obtained for the four pairs of intelligent pads.

In fact, we can note that we have no systematic error to reveal, within the accuracy of the dynamometer bench, and that the standard deviations and maximum errors are less than 1 Nm.

The device and method for measuring a vehicle's actual residual braking torque measured using intelligent pads were then tested under real-world conditions on board a motor vehicle.

To this end, the brake calipers of a passenger car were equipped with intelligent pads and specific dedicated tests were performed on a test track (Nardo circuit).

The test consisted in comparing the real time measurements taken using intelligent pads with measurements performed in a laboratory using an external sensor, reproducing the conditions of the vehicle speed, inducing the rotation of the wheel, activating a braking event as performed at the circuit and recording the residual braking torque values during a wheel revolution.

Repeating the procedure several times, a measurement was obtained which was then compared with the stable values obtained at the end of the test session on the track.

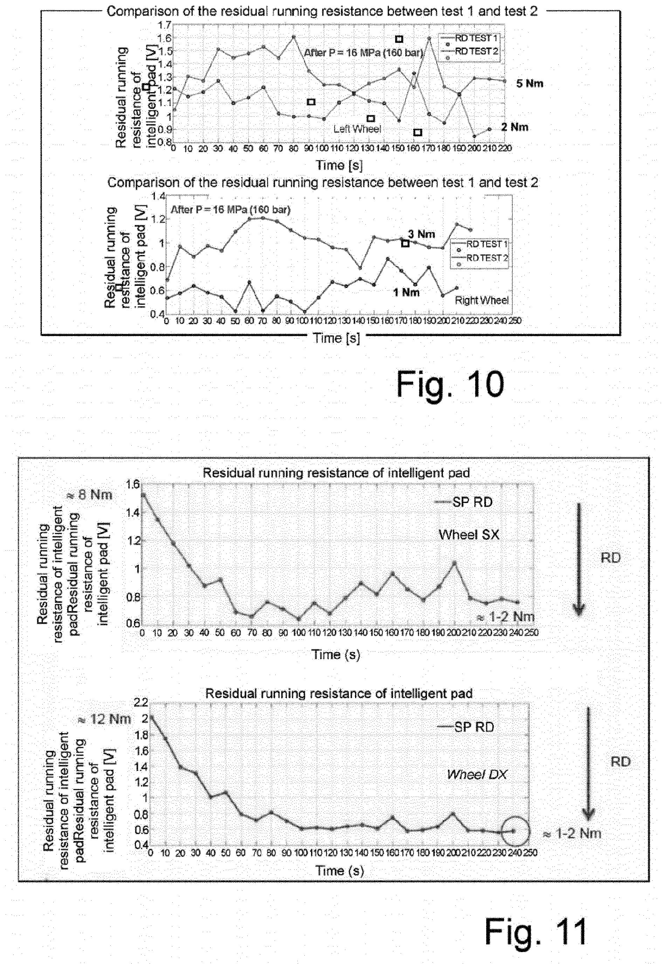

Figure 10 shows the typical results produced by the intelligent pad after a braking event of 16 MPa (160 bar) and those obtained before applying the brakes.

It can be seen how the braking event has induced greater residual torque, up to 5 Nm, than the residual torque under the preliminary braking condition.

Comparing these last values with those obtained in the laboratory using external torque sensor measurements, the results were seen to have been very similar, within the expected accuracy of 1 Nm.

As regards the response over time of the residual braking torque after braking, as shown in fig. 11 it is noticed that just after braking the residual braking torque values measured are greater, up to 10 Nm or more, but then the differences quickly reduce down to values of 1-2 Nm and tend to remain stable over time.

When comparing these values with those obtained in the laboratory using measurements taken by means of external torque sensors, they are once again very similar, within differences of 1-2 Nm. The present invention therefore describes a device and a method for measuring the residual braking torque values of a vehicle equipped with disc brakes, on board and in real time, based upon the real time measurement of signals detected from sensors installed on intelligent brake pads.

The device and the method have been shown to provide good repeatability of results and an accuracy that is comparable with the results obtained by means of a reference dynamometer test bench, which is known by State of the art.

The device and the method provide a new approach to the direct measurement of the residual braking torque and allow for its real time measurement even on board a vehicle and in real time.

The present and innovative invention, thanks to the fact that you can measure the residual braking torque in real time and precisely, can be used, among the other applications, to provide, through other dedicated means, instructions to the so-called intelligent brake calipers and thus to intervene on the actuation and the retraction of the actuating piston of the pads to minimize the clearance of these with the disc and at the same time reduce the residual braking torque to values below 0.5 Nm.

Therefore, the main advantages made possible by this special, but not exclusive or limited application of the invention, will be the minimization of the clearance between pads and brakes, resulting in a consequently minimal delay in applying the brakes, the control and minimization of residual braking torque with low brake pad wear and reduced fuel consumption, the minimization of the effect of aging and wear on the retraction materials and the maximization of the efficiency of the brake caliper thanks to the direct control in real time of the residual braking torque level.

Furthermore, the residual braking torque measurements detected in real time on board the vehicle by means of the invention can be sent in real time using specific connection means to at least one remote recording and processing unit.

It is clear that this device and method of measuring the residual braking torque by means of signals from intelligent brake pads, other than in on board applications and in real time, can be advantageously applied to a traditional dynamometer bench test, jointly or in lieu of standard known torque measurements.

The invention thus conceived is susceptible to numerous modifications and variants all falling within the inventive concept.

In particular, the device for the detection of the residual braking torque according to the invention can also be envisaged in a vehicle equipped with drum brakes comprising, for each wheel of the vehicle, of at least one piezoceramic sensor integrated beneath the friction material of the brake drum shoes.

Further, all the details can be replaced by technically equivalent elements.

In this regard, and of particular relevance, there is the use of such an embodiment in conjunction with other sensors integrated on board a brake pad, with particular reference to temperature sensors, preferably PT1000 type sensors, positioned on the screen printed circuit integrated into the metallic support of the intelligent brake pad. In addition, to complete the offer of the information available from this intelligent sensor, it is also possible to integrate a wear sensor or a brake pad wear indicator at a software level within the electronic control unit that manages the data from the intelligent brake pads obtained on the basis of the raw brake pad data. The residual torque data for each wheel, and the related contributions from individual brake caliper pads, not least the related brake pad temperature data and the level of wear of the same can then be transmitted to the vehicle on board multimedia service platform or to the "body computer" of the vehicle, or at least to a microprocessor belonging to said platform/system in order to visually or by means of alarms manage the data provided by the intelligent brake pad electronic control unit. The transmission of the data from the electronic control unit that manages the sensor data and the multimedia service system of the vehicle can take place via cable or wireless. In the latter case it is preferable that the electronic control unit that manages the brake pad is integrated in the immediate vicinity of the brake pad, and preferably within the detachable part of the connector, which will integrate the control unit and wireless transmission system in place of the data transmission cable. Further, a small battery or energy recovery device (thermal or mechanical) will feed all the electronics needed for the overall operation of the electronics. In order to make it possible to integrate everything and at low power, the entire system should preferably be implemented using an ASIC (Application Specific Integrated Circuit).

## Claims

1. A device for detecting the residual braking torque in a vehicle equipped with disc brakes comprising, for each wheel of the vehicle, of at least one piezoceramic sensor integrated into the friction material support of a brake assembly, **characterized in that** said piezoceramic sensor is connected, by means of an electrical circuit, to at least one electronic control unit dedicated to the acquisition and management, using means of management, of the signals detected by said piezoceramic sensor directly from said brake assembly friction material, said signal management means including at least one residual torque indicator interacting by means of at least one communication interface to the services of at least one on board vehicle computer over at least one dedicated communication system.

2. The device for detecting the residual braking torque in a vehicle equipped with disc brakes according to claim 1, **characterized in that** said means of managing said signals increase the measuring capacity of said piezoceramic sensor up to the range of typical braking torque measurements for measuring the residual braking torque.

3. The device for detecting the residual braking torque in a vehicle equipped with disc brakes according to claim 1, **characterized in that** said residual torque measurements are from 0.1 Nm to 30 Nm.

4. The device for detecting the residual braking torque in a vehicle equipped with disc brakes according to one or more of the preceding claims, **characterized in that** said residual braking torque indicator indirectly measures the actual braking torque and allows for the constant updating in real time of said measurements.

5. The device for detecting the residual braking torque in a vehicle equipped with disc brakes according to one or more of the preceding claims, **characterized in that** said residual braking torque indicator measures those amounts that may be associated with the presence of residual braking torque and its intensity.

6. The device for detecting the residual braking torque in a vehicle equipped with disc brakes according to one or more of the preceding claims, **characterized in that** said signal management means perform an analysis based upon frequency and/or an analysis based upon time.

**7.** The device for detecting the residual braking torque in a vehicle equipped with disc brakes according to one or more of the preceding claims, **characterized in that** said signal management means present, in quantitative terms, the residual braking torque starting out from the frequency spectrum of the signals provided by said at least one piezoceramic sensor.

**8.** The device for detecting the residual braking torque in a vehicle equipped with disc brakes according to one or more of the preceding claims, **characterized in that** said signal management means detect a specific peak structure within the frequency spectrum of the signals provided by said at least one piezoceramic sensor, which peaks are associated with the angular velocity of rotation of each wheel of said vehicle.

**9.** The device for detecting the residual braking torque in a vehicle equipped with disc brakes according to one or more of the preceding claims, **characterized in that** said signal management means detect a specific structure of oscillations in the intensities over time in the signals provided by said at least one piezoceramic sensor, which oscillations are associated with the angular velocity of rotation of each wheel of said vehicle.

**10.** The device for detecting the residual braking torque in a vehicle equipped with disc brakes according to one or more of the preceding claims, **characterized in that** it comprises a hardware or software band-pass filter operating at around 50 Hz in order to eliminate all of those electromagnetic compatibility (EMC) contributions that may influence the residual braking torque indicator.

**11.** The device for detecting the residual braking torque in a vehicle equipped with disc brakes according to one or more of the preceding claims, **characterized in that** said residual braking torque indicator obtained by means of signals as a function of time or as a function of time, as transmitted by said at least one piezoceramic sensor, is calibrated using a dynamometer bench for the direct measurement of the residual braking torque.

**12.** The device for detecting the residual braking torque in a vehicle equipped with disc brakes according to one or more of the preceding claims, **characterized in that** a temperature sensor is integrated into said electrical circuit.

**13.** The device for detecting the residual braking torque in a vehicle equipped with disc brakes according to one or more of the preceding claims, **characterized in that** said management means include at least one friction material wear indicator with at least one communication interface to the services of at least one on board vehicle computer over at least one dedicated communication system.

**14.** The device for detecting the residual braking torque in a vehicle equipped with disc brakes according to one or more of the preceding claims, **characterized in that** a connector is integrated into said friction material support that is connected to said electrical circuit and the electronic control unit by means of an electric cable.

**15.** The device for detecting the residual braking torque in a vehicle equipped with disc brakes according to one or more of the preceding claims, **characterized in that** a connector is integrated into said friction material support that is connected to said electrical circuit also integrating a wireless data transmission module in order to communicate with at least one vehicle on board computer by means of at least one dedicated communication system.

**16.** A method for the calibration of the residual braking torque in a vehicle equipped with disc brakes by means of a calibration reference dynamometer bench **characterized by**:

  • acquiring, by means of separating the brake pads from the disk, the background noise contained within the pad signals and the dynamometer bench in order to remove any unwanted contributions;
  • setting the residual braking torque by means of manually adjusting said bench in order to set the reference value;
  • mutually acquiring the residual braking torque data from said bench and from the residual braking torque indicator by means of the pad signals;
  • calibrating said experimental data by means of repeating the manual adjustment procedure and the mutual and contextual acquisition of the residual braking torque for several values of said residual braking torque values on said bench;
  • creating an analytical calibration curve interpolated from the best data from an experimental calibration curve.
  • identifying an analytical expression from the calibration curve for converting the residual braking torque indicator values to the actual residual braking torque values.

**Patentansprüche**

1. Vorrichtung zum Erfassen des Restbremsmoments in einem Fahrzeug, das mit Scheibenbremsen ausgestattet ist, die für jedes Rad des Fahrzeugs mindestens einen in den Reibmaterialträger einer Bremsenbaugruppe integrierten piezokeramischen Sensor umfassen, **dadurch gekennzeichnet, dass** der piezokeramische Sensor mittels einer elektrischen Schaltung mit mindestens einer elektronischen Steuereinheit verbunden ist, die zum Erfassen und Verwalten durch Mittel zum Verwalten der von dem piezokeramischen Sensor direkt aus dem Reibmaterial der Bremsenbaugruppe erfassten Signale vorgesehen ist, wobei die Signalverwaltungsmittel mindestens einen Restdrehmomentindikator umfassen, der durch mindestens eine Kommunikationsschnittstelle zu den Diensten mindestens eines Bordfahrzeugcomputers über mindestens ein dafür vorgesehenes Kommunikationssystem interagiert.

2. Vorrichtung zum Erfassen des Restbremsmoments in einem mit Scheibenbremsen ausgestatteten Fahrzeug nach Anspruch 1, **dadurch gekennzeichnet, dass** die Mittel zum Verwalten der Signale die Messkapazität des piezokeramischen Sensors bis in den Bereich typischer Bremsmomentmessungen zum Messen des Restbremsmoments erhöhen.

3. Vorrichtung zum Erfassen des Restbremsmoments in einem mit Scheibenbremsen ausgestatteten Fahrzeug nach Anspruch 1, **dadurch gekennzeichnet, dass** die Restdrehmomentmessungen von 0,1 Nm bis 30 Nm sind.

4. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** der Restbremsmomentindikator das tatsächliche Bremsmoment indirekt misst und die konstante Aktualisierung der Messungen in Echtzeit ermöglicht.

5. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** der Restbremsmomentindikator diejenigen Beträge misst, die mit dem Vorliegen eines Restbremsmoments und dessen Intensität verbunden sein können.

6. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** die Signalverwaltungsmittel eine Analyse basierend auf einer Frequenz und/oder eine Analyse basierend auf Zeit durchführen.

7. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** die Signalverwaltungsmittel das Restbremsmoment ausgehend von dem Frequenzspektrum der von dem mindestens einen piezokeramischen Sensor bereitgestellten Signale quantitativ darbieten.

8. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** die Signalverwaltungsmittel eine spezifische Spitzenstruktur innerhalb des Frequenzspektrums der von dem mindestens einen piezokeramischen Sensor bereitgestellten Signale erfassen, wobei die Spitzen mit der Winkelgeschwindigkeit der Drehung jedes Rades des Fahrzeugs assoziiert sind.

9. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** die Signalverwaltungsmittel eine spezifische Struktur von Schwingungen in den Intensitäten der von dem mindestens einen piezokeramischen Sensor bereitgestellten Signale über die Zeit hinweg erfassen, wobei die Schwingungen mit der Winkelgeschwindigkeit der Drehung jedes Rades des Fahrzeugs assoziiert sind.

10. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** sie ein Hardware- oder Software-Bandpassfilter umfasst, das bei etwa 50 Hz arbeitet, um alle diejenigen elektromagnetischen Kompatibilitäts-(EMS)-Beitragswerte zu eliminieren, die den Restbremsmomentindikator beeinflussen können.

11. Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** der Restbremsmomentindikator, der mittels Signalen als Funktion der Zeit oder als Funktion der Zeit, wie von dem mindestens einen piezokeramischen Sensor gesendet, erhalten wird, unter Verwendung einer Dynamometerbank zur direkten Messung des Restbremsmoments kalibriert wird.

**12.** Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** in die elektrische Schaltung ein Temperatursensor integriert ist.

**13.** Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** die Verwaltungsmittel mindestens einen Reibmaterialverschleißindikator mit mindestens einer Kommunikationsschnittstelle zu den Diensten mindestens eines Bordfahrzeugcomputers über mindestens ein dafür vorgesehenes Kommunikationssystem enthalten.

**14.** Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** ein Verbinder in den Reibmaterialträger integriert ist, der mittels eines elektrischen Kabels mit der elektrischen Schaltung und der elektronischen Steuereinheit verbunden ist.

**15.** Vorrichtung zum Erfassen des Restbremsmoments in einem mit Scheibenbremsen ausgestatteten Fahrzeug nach einem oder mehreren der vorhergehenden Ansprüche, **dadurch gekennzeichnet, dass** ein Verbinder in den Reibmaterialträger integriert ist, der mit der elektrischen Schaltung verbunden ist, wobei auch ein drahtloses Datensendemodul darin integriert ist, um durch mindestens ein dafür vorgesehenes Kommunikationssystem mit mindestens einem Bordfahrzeugcomputer zu kommunizieren.

**16.** Verfahren zum Kalibrieren des Restbremsmoments in einem mit Scheibenbremsen ausgestatteten Fahrzeug mittels einer Kalibrierreferenz-Dynamometerbank, **gekennzeichnet durch**:

• Erfassen des in den Klotzsignalen und der Dynamometerbank enthaltenen Hintergrundgeräusches durch Trennen der Bremsklötze von der Scheibe, um unerwünschte Beitragswerte zu entfernen;
• Einstellen des Restbremsmoments mittels manueller Anpassung dieser Bank, um den Referenzwert einzustellen;
• gegenseitiges Erfassen der Restbremsmomentdaten von der Bank und von dem Restbremsmomentindikator mittels der Klotzsignale;
• Kalibrieren der experimentellen Daten mittels Wiederholen des manuellen Anpassungsvorgangs und der gegenseitigen und der kontextuellen Erfassung des Restbremsmoments für mehrere Werte der Restbremsmomentwerte auf der Bank;
• Erzeugen einer analytischen Kalibrierungskurve, die von den besten Daten aus einer experimentellen Kalibrierungskurve interpoliert wird.
• Identifizieren eines analytischen Ausdrucks aus der Kalibrierungskurve zum Umwandeln der Restbremsmomentindikatorwerte in die tatsächlichen Restbremsmomentwerte.

## Revendications

**1.** Dispositif de détection du couple de freinage résiduel dans un véhicule équipé de freins à disque comprenant, pour chaque roue du véhicule, au moins un capteur piézocéramique intégré dans le support en matériau de friction d'un ensemble de freinage, **caractérisé en ce que** ledit capteur piézocéramique est connecté, au moyen d'un circuit électrique, à au moins une unité de commande électronique dédiée à l'acquisition et à la gestion, à l'aide de moyens de gestion, des signaux détectés par ledit capteur piézocéramique directement à partir dudit matériau de friction de l'ensemble de freinage, lesdits moyens de gestion des signaux comprenant au moins un indicateur de couple résiduel interagissant au moyen d'au moins une interface de communication avec les services d'au moins un ordinateur de bord embarqué sur au moins un système de communication dédié.

**2.** Dispositif pour la détection du couple de freinage résiduel dans un véhicule équipé de freins à disque selon la revendication 1, **caractérisé en ce que** lesdits moyens de gestion desdits signaux augmentent la capacité de mesure dudit capteur piézocéramique jusqu'à la plage des mesures de couple de freinage typiques pour la mesure du couple de freinage résiduel.

3. Dispositif pour la détection du couple de freinage résiduel dans un véhicule équipé de freins à disque selon la revendication 1, **caractérisé en ce que** lesdites mesures de couple résiduel sont comprises entre 0,1 Nm et 30 Nm.

4. Dispositif pour la détection du couple de freinage résiduel dans un véhicule équipé de freins à disque selon l'une ou plusieurs des revendications précédentes, **caractérisé en ce que** ledit indicateur de couple de freinage résiduel mesure indirectement le couple de freinage actuel et permet la mise à jour constante en temps réel desdites mesures.

5. Dispositif pour la détection du couple de freinage résiduel dans un véhicule équipé de freins à disque selon l'une ou plusieurs des revendications précédentes, **caractérisé en ce que** ledit indicateur de couple de freinage résiduel mesure ces montants qui peuvent être associés à la présence d'un couple de freinage résiduel et de son intensité.

6. Dispositif pour la détection du couple de freinage résiduel dans un véhicule équipé de freins à disque selon l'une ou plusieurs des revendications précédentes, **caractérisé en ce que** lesdits moyens de gestion dudit signal signifient effectuer une analyse sur base de la fréquence et/ ou une analyse sur base du temps.

7. Dispositif pour la détection du couple de freinage résiduel dans un véhicule équipé de freins à disque selon l'une ou plusieurs des revendications précédentes, **caractérisé en ce que** lesdits moyens de gestion de signal présentent, en termes quantitatifs, le couple de freinage résiduel à partir du spectre de fréquence des signaux fournis par ledit au moins un capteur piézocéramique.

8. Dispositif pour la détection du couple de freinage résiduel dans un véhicule équipé de freins à disque selon l'une ou plusieurs des revendications précédentes, **caractérisé en ce que** lesdits moyens de gestion de signal détectent une structure de crête spécifique dans le spectre de fréquence des signaux fournis par ledit au moins un capteur piézocéramique, lesquelles crêtes sont associées à la vitesse angulaire de rotation de chaque roue dudit véhicule.

9. Dispositif pour la détection du couple de freinage résiduel dans un véhicule équipé de freins à disque selon l'une ou plusieurs des revendications précédentes, **caractérisé en ce que** lesdits moyens de gestion de signal détectent une structure spécifique d'oscillations dans les intensités au fil du temps dans les signaux fournis par ledit au moins un capteur piézocéramique, lesquelles oscillations sont associées à la vitesse angulaire de rotation de chaque roue dudit véhicule.

10. Dispositif permettant de détecter le couple de freinage résiduel dans un véhicule équipé de freins à disque selon l'une ou l'autre des revendications précédentes, **caractérisé en ce qu'**il comprend un filtre de passe-bande matériel ou logiciel fonctionnant à environ 50 Hz afin d'éliminer toutes les contributions de compatibilité électromagnétique (CEM) susceptibles d'influencer l'indicateur de couple de freinage résiduel.

11. Dispositif permettant de détecter le couple de freinage résiduel dans un véhicule équipé de freins à disque selon l'une ou l'autre des revendications précédentes, **caractérisé en ce que** ledit indicateur de couple de freinage résiduel obtenu par le biais d'au moins un capteur piézocéramique est calibré à l'aide d'un banc dynamomètre pour la mesure directe du couple de freinage résiduel.

12. Dispositif permettant de détecter le couple de freinage résiduel dans un véhicule équipé de freins à disque selon l'une ou l'autre des revendications précédentes, **caractérisé en ce qu'**un capteur de température est intégré dans ledit circuit électrique.

13. Dispositif permettant de détecter le couple de freinage résiduel dans un véhicule équipé de freins à disque selon l'une ou l'autre des revendications précédentes, **caractérisé en ce que** lesdits moyens de gestion comprennent au moins un indicateur d'usure de matériau de friction avec au moins une interface de communication aux services d'au moins un ordinateur embarqué sur le véhicule sur au moins un système de communication dédié.

14. Dispositif permettant de détecter le couple de freinage résiduel dans un véhicule équipé de freins à disque selon l'une ou l'autre des revendications précédentes, **caractérisé en ce qu'**un connecteur est intégré dans ledit support de matériau de friction qui est connecté audit circuit électrique et à l'unité de commande électronique au moyen d'un câble électrique.

15. Dispositif permettant de détecter le couple de freinage résiduel dans un véhicule équipé de freins à disque selon l'une ou l'autre des revendications précédentes, **caractérisé en ce qu'**un connecteur est intégré dans ledit support de matériau de friction qui est connecté audit circuit électrique, intégrant également un module de transmission de données sans fil afin de communiquer avec au moins un ordinateur embarqué sur véhicule au moyen d'au moins un système de communication dédié.

16. Procédé pour l'étalonnage du couple de freinage résiduel dans un véhicule équipé de freins à disque au moyen d'un banc dynamomètrique de référence d'étalonnage **caractérisé par** :

• l'acquisition, au moyen de la séparation des plaquettes de frein du disque, du bruit de fond contenu dans les signaux de plaquette et du banc dynamomètrique afin de supprimer toute contribution indésirable ;
• la définition du couple de freinage résiduel au moyen d'un ajustement manuel dudit banc afin de définir la valeur de référence ;
• l'acquisition mutuelle des données de couple de freinage résiduel à partir dudit banc et de l'indicateur de couple de freinage résiduel au moyen des signaux de plaquette ;
• l'étalonnage desdites données expérimentales au moyen de la répétition de la procédure d'ajustement manuel et de l'acquisition mutuelle et contextuelle du couple de freinage résiduel pour plusieurs valeurs desdites valeurs de couple de freinage résiduel sur ledit banc ;
• la création d'une courbe d'étalonnage analytique interpolée à partir des meilleures données d'une courbe d'étalonnage expérimentale.
• l'identification d'une expression analytique de la courbe d'étalonnage pour la conversion des valeurs d'indicateur de couple de freinage résiduel aux valeurs de couple de freinage résiduel actuelles.

# Fig. 1

21

14

6

7

12

13

16

15

11

# Fig. 2

A/D

60

Processing

64

63

Comm Bus (CAN Network)

Actuator Interface

AI CAN Network

AI Hydraulic System Components

61

62 Vehicle Computer

# Fig. 3

## Test at 500 revolutions per minute

Fig. 4

Fig. 5

# Fig. 6a

Residual running resistance

$y = 55{,}823x^3 + 3{,}0069x^2 + 2{,}135x$
$R^2 = 0{,}993$

3rd order polynomial calibration curve

0.6 Nm

# Fig. 6b

Fig. 7

Fig. 8

19

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20070027041 A1